# EUROPEAN PATENT APPLICATION

(11) **EP 2 854 342 A1**
(43) Date of publication of application: **01.04.2015**
(21) Application number: 13831922.3
(22) Date of filing: 28.10.2013
(51) Int. Cl.: H04L 12/28

(54) **MULTI-SCREEN INTERACTION METHOD, APPARATUS, AND TERMINAL DEVICE**

(30) Priority: 18.06.2013 CN 201310242946
(71) Applicant: Huawei Technologies Co., Ltd., Longgang District Shenzhen, Guangdong 518129 (CN)
(72) Inventor: JIANG, Xiuping, Shenzhen Guangdong 518129 (CN); ZHU, Haifeng, Shenzhen Guangdong 518129 (CN); GUO, Shuaisheng, Shenzhen Guangdong 518129 (CN); WANG, Yunze, Shenzhen Guangdong 518129 (CN)
(74) Representative: Goddar, Heinz J.
(86) International application number: PCT/CN2013/086091
(87) International publication number: WO 2014/201792

(57) **Abstract**

Embodiments of the present invention provide an AirSharing method, an AirSharing apparatus, and an AirSharing terminal. The AirSharing method of the present invention includes: determining whether an interface to be shared currently is a media interface; if the interface to be shared currently is a media interface, implementing AirSharing with a peer device in a Digital Living Network Alliance manner; and if the interface to be shared currently is not a media interface, implementing AirSharing with the peer device in a mirroring manner. In this way, a current playing scenario can be determined, and the Digital Living Network Alliance manner or the mirroring manner is used adaptively to implement AirSharing with the peer device.

## Description

### TECHNICAL FIELD

Embodiments of the present invention relate to communication technologies, and in particular, to an AirSharing method, an AirSharing apparatus, and a terminal device.

### BACKGROUND

With the development of network communication technologies and multimedia technologies, people apply smart terminals such as a smart television, a smartphone, and a tablet computer more extensively, and hope that a picture and multimedia content can be shared on different smart terminals to implement AirSharing between different smart terminals. For example, a movie on a mobile phone can be switched to a television for playing, and content on a tablet computer can be projected onto the television.

The Airplay of Apple Inc. implements sharing of multimedia content and pictures on different smart terminals by using a Digital Living Network Alliance (DIGITAL LIVING NETWORK ALLIANCE, DLNA for short) technology or a mirroring technology. For example, when content played on a mobile phone is pushed to a television by using the mirroring technology, people can watch, on the television end, content same as the content on the mobile phone end. However, because the mirroring technology has problems such as poor playing quality, when the mobile phone end pushes the played multimedia content to the television, people cannot obtain a good playing effect on the television end. When the multimedia content played on the mobile phone is pushed to the television by using the DLNA technology, people can obtain a good playing effect on the television end, but the DLNA technology has a problem of occupying too many network resources.

### SUMMARY

Embodiments of the present invention provide an AirSharing method, an AirSharing apparatus, and a terminal device, so that a current playing scenario can be determined automatically and a DLNA manner or a mirroring manner is used adaptively to implement AirSharing with a peer device.

In a first aspect, an embodiment of the present invention provides an AirSharing method, including:
determining whether an interface to be shared currently is a media interface;
if the interface to be shared currently is a media interface, implementing AirSharing with a peer device in a Digital Living Network Alliance manner; and
if the interface to be shared currently is not a media interface, implementing AirSharing with the peer device in a mirroring manner.

In a first possible implementation manner of the first aspect, the determining whether an interface to be shared currently is a media interface includes:
obtaining a current application state of a media application; and
determining, according to the current application state, whether the interface to be shared currently is a media interface.

According to the first possible implementation manner of the first aspect, in a second possible implementation manner, the obtaining a current application state of a media application includes:
after establishing a communication connection with the peer device, obtaining the current application state of the media application;
or,
after opening a media file to be shared, obtaining the current application state of the media application.

According to the second possible implementation manner of the first aspect, in a third possible implementation manner, after the opening a media file to be shared, the method further includes:
determining whether there exists a communication connection with the peer device; and
if there exists a communication connection with the peer device, executing the step of obtaining the current application state of the media application.

According to any one of the first possible implementation manner to the third possible implementation manner of the first aspect, in a fourth possible implementation manner, the obtaining a current application state of a media application includes:
obtaining an interface reference value in a processing progress; and
the determining, according to the current application state, whether the interface to be shared currently is a media interface includes:
   determining, according to the interface reference value, whether the interface to be shared currently is a media interface.

According to the first aspect or any one of the first possible implementation manner to the fourth possible implementation manner of the first aspect, in a fifth possible implementation manner, before the implementing AirSharing with a peer device in a Digital Living Network Alliance manner if the interface to be shared currently is a media interface, the method further includes:
determining whether the peer device supports the Digital Living Network Alliance manner; and
if the peer device supports the Digital Living Network Alliance manner, executing the step of implementing AirSharing with the peer device in the Digital Living Network Alliance manner.

In a second aspect, an embodiment of the present invention provides an AirSharing apparatus, including:
a media interface determining module, configured to determine whether an interface to be shared currently is a media interface;
a first AirSharing module, configured to implement AirSharing with a peer device in a Digital Living Network Alliance manner if the interface to be shared currently is a media interface; and
a second AirSharing module, configured to implement AirSharing with the peer device in a mirroring manner if the interface to be shared currently is not a media interface.

In a first possible implementation manner of the second aspect, the media interface determining module includes:
an application state obtaining unit, configured to obtain a current application state of a media application; and
a media interface determining unit, configured to determine, according to the current application state, whether the interface to be shared currently is a media interface.

According to the first possible implementation manner of the second aspect, in a second possible implementation manner, the application state obtaining unit is specifically configured to obtain the current application state of the media application after a communication connection is established with the peer device;
or,
is specifically configured to obtain the current application state of the media application after a media file to be shared is opened.

According to the second possible implementation manner of the second aspect, in a third possible implementation manner, the AirSharing apparatus further includes:
a communication connection determining module, configured to determine, after the media file to be shared is opened, whether there exists a communication connection with the peer device; and
if there exists a communication connection with the peer device, the application state obtaining unit executes the step of obtaining the current application state of the media application.

According to any one of the first possible implementation manner to the third possible implementation manner of the second aspect, in a fourth possible implementation manner, the application state obtaining unit is specifically configured to obtain an interface reference value in a processing progress; and
the media interface determining unit is specifically configured to determine, according to the interface reference value, whether the interface to be shared currently is a media interface.

According to the second aspect or any one of the first possible implementation manner to the fourth possible implementation manner of the second aspect, in a fifth possible implementation manner, the AirSharing apparatus further includes:
a Digital Living Network Alliance capability determining module, configured to determine whether the peer device supports the Digital Living Network Alliance manner; and
if the peer device supports the Digital Living Network Alliance manner, the first AirSharing module executes the step of implementing AirSharing with the peer device in the Digital Living Network Alliance manner.

In a third aspect, an embodiment of the present invention provides a terminal device, including a processor and a communication module, where the processor is configured to determine whether an interface to be shared currently is a media interface; and
the communication module is configured to: if the interface to be shared currently is a media interface, implement AirSharing with a peer device in a Digital Living Network Alliance manner; and if the interface to be shared currently is not a media interface, implement AirSharing with the peer device in a mirroring manner.

In a first possible implementation manner of the third aspect, the processor is specifically configured to:
obtain a current application state of a media application; and
determine, according to the current application state, whether the interface to be shared currently is a media interface.

In the AirSharing method, the AirSharing apparatus, and the terminal device according to the embodiments of the present invention, whether an interface to be shared currently is a media interface is determined; if the interface to be shared currently is a media interface, AirSharing is implemented with a peer device in a DLNA manner; and if the interface to be shared currently is not a media interface, AirSharing is implemented with the peer device in a mirroring manner. This solves a problem in the prior art that when a mirroring technology is used, a picture playing quality of the peer device is poor and solves a problem that when non-media content played on a mobile phone is pushed to the peer device by using a DLNA technology, an unnecessary waste of network resources exists. As a result, a current playing scenario can be determined, and the DLNA manner or the mirroring manner is used adaptively to implement AirSharing with the peer device.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show some embodiments of the present invention, and persons of ordinary skill in the art may still derive other drawings from these accompanying drawings without creative efforts.
FIG. 1 is a flowchart of an AirSharing method according to a first embodiment of the present invention;
FIG. 2 is a flowchart of an AirSharing method according to a second embodiment of the present invention;
FIG. 3 is a flowchart of an AirSharing method according to a third embodiment of the present invention;
FIG. 4 is a flowchart of an AirSharing method according to a fourth embodiment of the present invention;
FIG. 5 is a flowchart of an AirSharing method according to a fifth embodiment of the present invention;
FIG. 6 is a schematic structural diagram of an AirSharing apparatus according to a sixth embodiment of the present invention; and
FIG. 7 is a schematic structural diagram of an AirSharing apparatus according to a seventh embodiment of the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are a part rather than all of the embodiments of the present invention. All other embodiments obtained by persons of ordinary skill in the art based on the embodiments of the present invention without creative efforts shall fall within the protection scope of the present invention.

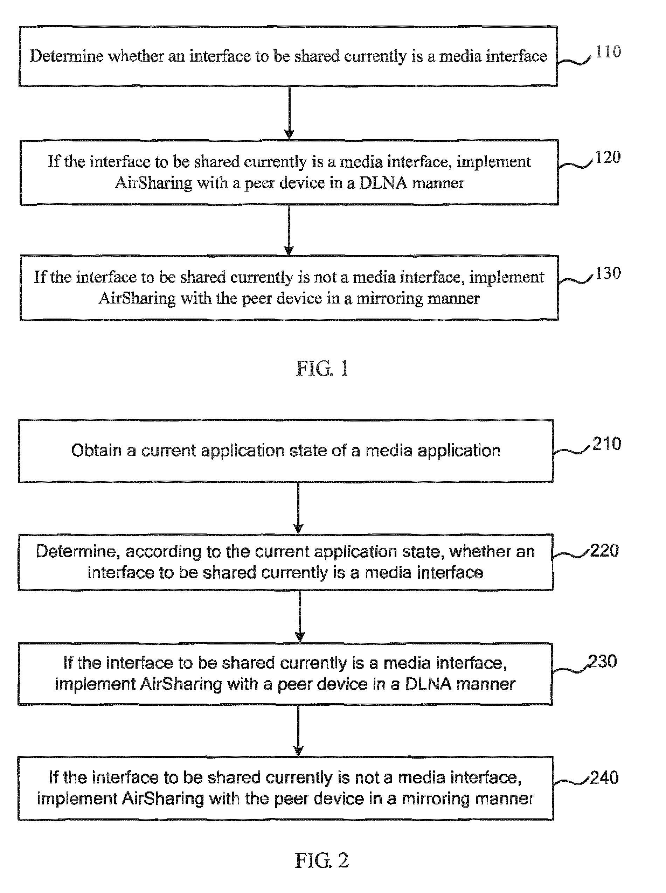

FIG. 1 is a flowchart of an AirSharing method according to a first embodiment of the present invention. The method according to this embodiment is applicable to a case that a current application scenario can be determined automatically according to a current playing interface and thereby an optimal manner for AirSharing with a peer device is selected. The method is executed by an AirSharing apparatus configured in a terminal, where the apparatus is generally implemented in a hardware and/or software manner. The method according to this embodiment includes the following steps:
Step 110: Determine whether an interface to be shared currently is a media interface.

Because more and more users apply an AirSharing function of an AirSharing terminal, the users have an increasing requirement for the AirSharing terminal to share more multimedia interfaces, and hope that they can obtain a good playing effect when sharing a media interface. The purpose of this step is to determine whether the interface to be shared currently is a media interface; for example, when a current playing scenario is playing multimedia content, it can be determined that the interface to be shared currently is a media interface, and step 120 is executed.
Step 120: If the interface to be shared currently is a media interface, implement AirSharing with a peer device in a DLNA manner.

When the interface to be shared currently is a media interface, AirSharing is implemented with the peer device in the DLNA manner. When the DLNA manner is used, the multimedia content is transmitted to the peer device for playing, and therefore a good playing effect can be obtained on the peer device side.
Step 130: If the interface to be shared currently is not a media interface, implement AirSharing with the peer device in a mirroring manner.

When the interface to be shared currently is not a media interface, AirSharing is implemented with the peer device in the mirroring manner. When the mirroring manner is used, a screenshot is taken from a current playing interface, and the screenshot is transmitted to the peer device for playing. When the interface to be shared is not a media interface, transmission in the mirroring manner does not have an obvious impact on the playing effect. Therefore, the playing effect is not affected and meanwhile too many network resources may not be occupied.

Specifically, a manner which is used to implement AirSharing with the peer device is determined according to whether the interface to be shared currently is a media interface; when the interface to be shared currently is a media interface, the DLNA manner is used to implement AirSharing with the peer device; and when the interface to be shared currently is not a media interface, the mirroring manner is used to implement AirSharing with the peer device. It should be noted herein that the manner can be automatically switched to the DLNA manner or the mirroring manner according to whether the interface to be shared currently is a media interface. For example, when the interface to be shared currently is a media interface, the DLNA manner is used to implement AirSharing with the peer device, and if the interface to be shared currently is changed to a non-media interface, the manner is automatically switched to the mirroring manner to implement AirSharing with the peer device.

In the AirSharing method according to this embodiment, whether an interface to be shared currently is a media interface is determined; if the interface to be shared currently is a media interface, a DLNA manner is selected to implement AirSharing with a peer device; and if the interface to be shared currently is not a media interface, a mirroring manner is used to implement AirSharing with the peer device. In this way, a current playing scenario can be determined, and the DLNA manner or the mirroring manner is used adaptively to implement AirSharing with the peer device.

This embodiment is further optimized on the basis of the foregoing first embodiment. FIG. 2 is a flowchart of an AirSharing method according to a second embodiment of the present invention. Referring to FIG. 2, the method according to this embodiment may include:
Step 210: Obtain a current application state of a media application.

The current application state of the media application may be obtained after a communication connection is established with a peer device; or the current application state of the media application is obtained after a media file to be shared is opened. After the media file to be shared is opened, the method may further include: determining whether there exists a communication connection with the peer device; if there exists a communication connection with the peer device, executing the step of obtaining the current application state of the media application.
Step 220: Determine, according to the current application state, whether an interface to be shared currently is a media interface.
Step 230. If the interface to be shared currently is a media interface, implement AirSharing with the peer device in a DLNA manner.
Step 240: If the interface to be shared currently is not a media interface, implement AirSharing with the peer device in a mirroring manner.

Before step 230, the method may further include: determining whether the peer device supports a DLNA manner; and if the peer device supports the DLAN manner, executing the step of implementing AirSharing with the peer device in the DLNA manner.

In the AirSharing method according to this embodiment, a current application state of a media application is obtained, and whether an interface to be shared currently is a media interface is determined according to the current application state; if the interface to be shared currently is a media interface, a DLNA manner is selected to implement AirSharing with a peer device; and if the interface to be shared currently is not a media interface, a mirroring manner is used to implement AirSharing with the peer device. In this way, whether the interface to be shared currently is a media interface can be determined according to the current application state of the media application, and the DLNA manner or the mirroring manner is used adaptively to implement AirSharing with the peer device.

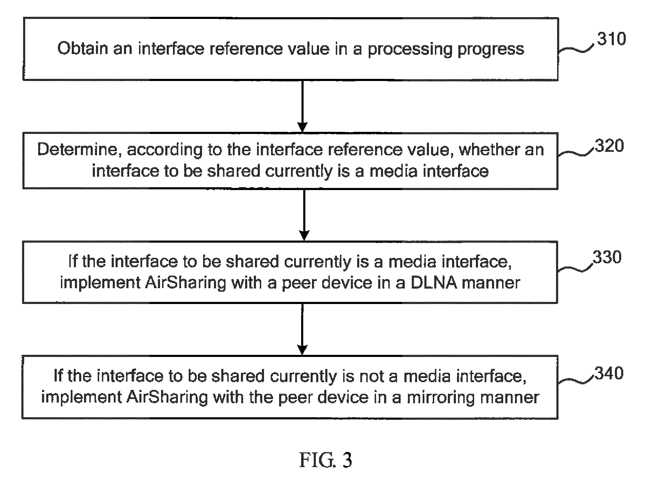

This embodiment is further optimized on the basis of the foregoing second embodiment. FIG. 3 is a flowchart of an AirSharing method according to a third embodiment of the present invention. Referring to FIG. 3, the method according to this embodiment may include:
Step 310: Obtain an interface reference value in a processing progress.

The interface reference value in the processing progress may be "NOTPLAYING", "MUSIC", "VIDEO", and "IMAGE".
Step 320: Determine, according to the interface reference value, whether an interface to be shared currently is a media interface.

When the interface reference value is "NOTPLAYING", it indicates that the interface to be shared currently is a non-media playing interface; when the interface reference value is "MUSIC", it indicates that the interface to be shared currently is a music media playing interface; when the interface reference value is "VIDEO", it indicates that the interface to be shared currently is a video media playing interface; and when the interference reference value is "IMAGE", it indicates that the interface to be shared currently is a picture media playing interface.
Step 330: If the interface to be shared currently is a media interface, implement AirSharing with a peer device in a DLNA manner.

If the interface reference value is "MUSIC", "VIDEO" or "IMAGE", the DLNA manner is used to implement AirSharing with the peer device.
Step 340: If the interface to be shared currently is not a media interface, implement AirSharing with the peer device in a mirroring manner.

In the AirSharing method according to this embodiment, an interface reference value in a processing progress is obtained, and whether an interface to be shared currently is a media interface is determined according to the interface reference value; if the interface to be shared currently is a media interface, a DLNA manner is selected to implement AirSharing with a peer device; and if the interface to be shared currently is not a media interface, a mirroring manner is used to implement AirSharing with the peer device. In this way, whether the interface to be shared currently is a media interface can be determined according to the interface reference value in the processing progress, so that the DLNA manner or the mirroring manner can be used adaptively to implement AirSharing with the peer deice.

To further describe the AirSharing method provided in all the foregoing embodiments, the following describes the AirSharing method with reference to two application scenarios respectively. A first application scenario is as follows: An AirSharing process is implemented when an AirSharing function is started initially and a communication connection is established with a peer device; and a second application scenario is as follows: The AirSharing function has already been started, and an AirSharing process is implemented with a peer device after a media file is opened.

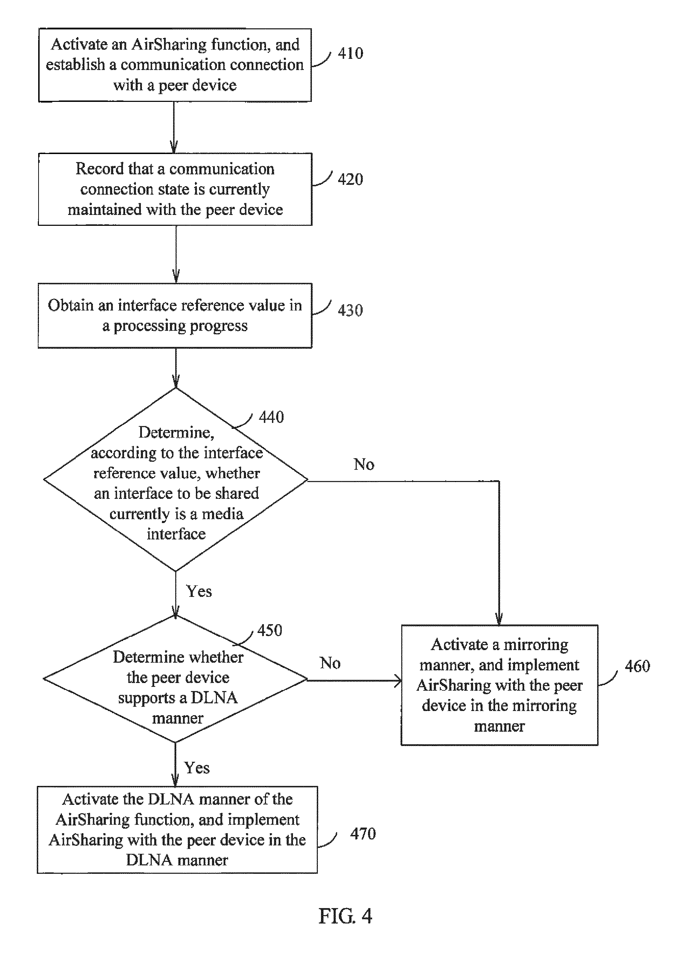

For the first application scenario, the AirSharing method in the first application scenario is described with reference to FIG. 4. FIG. 4 is a flowchart of an AirSharing method according to a fourth embodiment of the present invention. Referring to FIG 4, the method according to this embodiment may include:

Step 410: Activate an AirSharing function, and establish a communication connection with a peer device.

In a media application, the AirSharing function may be activated by using an AirSharing "AirSharing" icon of an application such as "Gallery" and "Music"; and in a non-media application, the AirSharing function is activated by clicking an icon corresponding to a toolbox "ToolBox".

Step 420: Record that a communication connection state is currently maintained with the peer device.
Step 430: Obtain an interface reference value in a processing progress.
Step 440: Determine, according to the interface reference value, whether an interface to be shared currently is a media interface. If the interface to be shared currently is a media interface, step 450 is executed; and if the interface to be shared currently is not a media interface, step 460 is executed.
Step 450: Determine whether the peer device supports a DLNA manner. If the peer device supports the DLNA manner, step 470 is executed; and if the peer device does not support the DLNA manner, step 460 is executed.
Step 460: Activate a mirroring manner, and implement AirSharing with the peer device in the mirroring manner.

For example, in step 460, a "WiFiDisplay" technology may be used to project a picture and a sound of an AirSharing terminal onto the peer device.
Step 470: Activate the DLNA manner of the AirSharing function, and implement AirSharing with the peer device in the DLNA manner.

In the AirSharing method according to this embodiment, whether an interface to be shared currently is a media interface is determined according to an interface reference value; and if the interface to be shared currently is a media interface, whether a peer device supports a DLNA manner is further determined, so that the DLNA manner or a mirroring manner is used adaptively to implement AirSharing with the peer device.

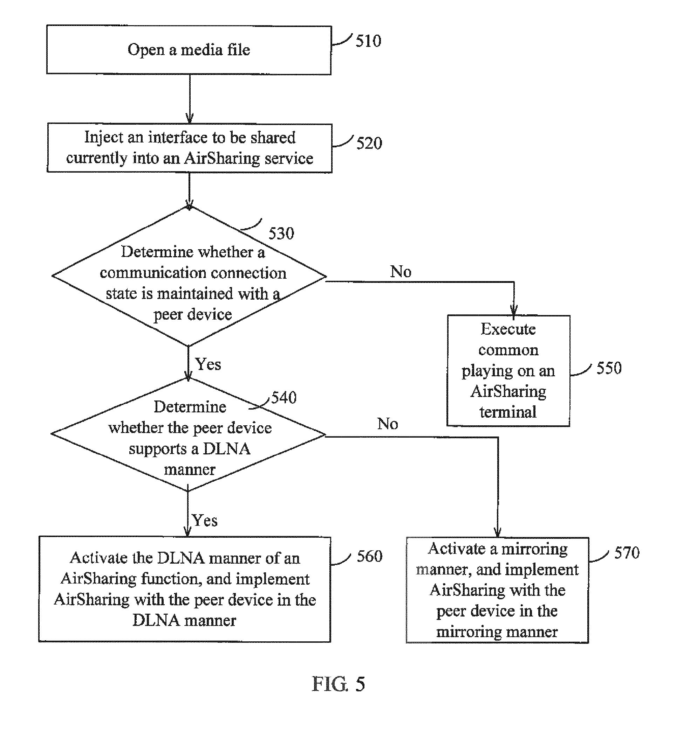

For the second application scenario, the AirSharing method in the second application scenario is described with reference to FIG. 5. FIG. 5 is a flowchart of an AirSharing method according to a fifth embodiment of the present invention. Referring to FIG. 5, the method according to this embodiment may include:
Step 510: Open a media file.
Step 520: Inject an interface to be shared currently into an AirSharing service.
Step 530: Determine whether a communication connection state is maintained with a peer device. If the communication connection state is maintained with the peer device, step 540 is executed; and if the communication connection state is not maintained with the peer device, step 550 is executed.
Step 540: Determine whether the peer device supports a DLNA manner. If the peer device supports the DLNA manner, step 560 is executed; and if the peer device does not support the DLNA manner, step 570 is executed.
Step 550: Execute common playing on an AirSharing terminal.
Step 560: Activate the DLNA manner of an AirSharing function, and implement AirSharing with the peer device in the DLNA manner.
Step 570: Activate a mirroring manner, and implement AirSharing with the peer device in the mirroring manner.

In the AirSharing method according to this embodiment, after a media file is opened, whether a communication connection state is maintained with a peer device is first determined; and then whether the peer device supports a DLNA manner is determined, so that the DLNA manner or a mirroring manner is selected to implement AirSharing with the peer device. In this way, according to whether the peer device supports the DLNA manner, the DLNA manner or the mirroring manner can be used adaptively to implement AirSharing with the peer device.

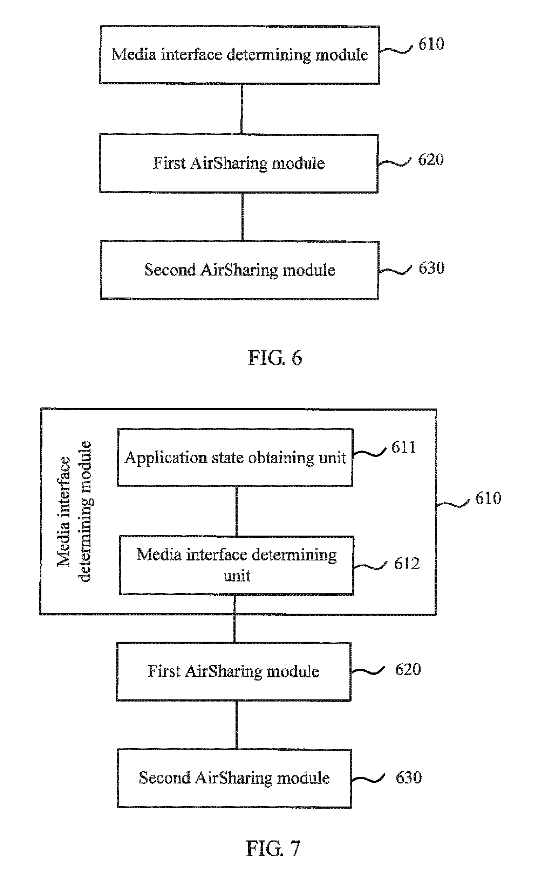

FIG. 6 is a schematic structural diagram of an AirSharing apparatus according to a sixth embodiment of the present invention. The apparatus according to this embodiment is applicable to a case that according to a current playing scenario, a DLNA manner or a mirroring manner can be used adaptively to implement AirSharing with a peer device. The apparatus is generally implemented in a hardware and/or software manner. Referring to FIG. 6, the AirSharing apparatus includes the following modules: a media interface determining module 610, a first AirSharing module 620, and a second AirSharing module 630.

The media interface determining module 610 is configured to determine whether an interface to be shared currently is a media interface; the first AirSharing module 620 is configured to, if the interface to be shared currently is a media interface, implement AirSharing with the peer device in the DLNA manner; and the second AirSharing module 630 is configured to, if the interface to be shared currently is not a media interface, implement AirSharing with the peer device in the mirroring manner.

Further, the apparatus may further include: a DLNA capability determining module, configured to, if the interface to be shared currently is a media interface, determine whether the peer device supports the DLNA manner before AirSharing is implemented with the peer device in the DLNA manner; if the peer device supports the DLNA manner, the first AirSharing module executes the step of implementing AirSharing with the peer device in the DLNA manner.

In the AirSharing apparatus according to this embodiment, whether an interface to be shared currently is a media interface is determined; if the interface to be shared currently is a media interface, a DLNA manner is selected to implement AirSharing with a peer device; and if the interface to be shared currently is not a media interface, a mirroring manner is used to implement AirSharing with the peer device. In this way, a current playing scenario can be determined, and the DLNA manner or the mirroring manner is used adaptively to implement AirSharing with the peer device.

FIG 7 is a schematic structural diagram of an AirSharing apparatus according to a seventh embodiment of the present invention. Referring to FIG. 7, on the basis of the foregoing sixth embodiment, the media interface determining module 610 specifically includes the following units: an application state obtaining unit 611 and a media interface determining unit 612.

The application state obtaining unit 611 is configured to obtain a current application state of a media application; and the media interface determining unit 612 is configured to determine, according to the current application state, whether an interface to be shared currently is a media interface.

The application state obtaining unit 611 is specifically configured to obtain the current application state of the media application after a communication connection is established with a peer device; or the application state obtaining unit 611 is specifically configured to obtain the current application state of the media application after a media file to be shared is opened.

It should be noted herein that the apparatus may further include: a communication connection determining module, configured to determine, after the media file to be shared is opened, whether there exists a communication connection with the peer device; if there exists a communication connection with the peer device, the application state obtaining unit executes the step of obtaining the current application state of the media application.

Specifically, the application state obtaining unit 611 is specifically configured to obtain an interface reference value in a processing progress; and the media interface determining unit 612 is specifically configured to determine, according to the interface reference value, whether the interface to be shared currently is a media interface.

In the AirSharing apparatus according to this embodiment, a current application state of a media application is obtained, and whether an interface to be shared currently is a media interface is determined according to the current application state; if the interface to be shared currently is a media interface, a DLNA manner is selected to implement AirSharing with a peer device; and if the interface to be shared currently is not a media interface, a mirroring manner is used to implement AirSharing with the peer device. In this way, whether the interface to be shared currently is a media interface can be determined according to the current application state of the media application, and the DLNA manner or the mirroring manner is used adaptively to implement AirSharing with the peer device.

It should be noted that an embodiment of the present invention further provides a terminal device, where the terminal device may be a smart terminal such as a smartphone, a smart television, and a tablet computer. The terminal device includes a processor and a communication module, where the processor is configured to determine whether an interface to be shared currently is a media interface, and the communication module is configured to: if the interface to be shared currently is a media interface, implement AirSharing with a peer device in a DLNA manner; and if the interface to be shared currently is not a media interface, implement AirSharing with the peer device in a mirroring manner. The processor is specifically configured to obtain a current application state of a media application, and determine, according to the current application state, whether the interface to be shared currently is a media interface. The communication module may be specifically a WiFi chip.

In the terminal device according to this embodiment, whether an interface to be shared currently is a media interface is determined; if the interface to be shared currently is a media interface, a DLNA manner is selected to implement AirSharing with a peer device; and if the interface to be shared currently is not a media interface, a mirroring manner is used to implement AirSharing with the peer device. In this way, a current playing scenario can be determined, and the DLNA manner or the mirroring manner is used adaptively to implement AirSharing with the peer device.

Persons of ordinary skill in the art may understand that all or a part of the steps of the method embodiments may be implemented by a program instructing relevant hardware. The program may be stored in a computer readable storage medium. When the program runs, the steps of the method embodiments are performed. The foregoing storage medium includes: any medium that can store program code, such as a ROM, a RAM, a magnetic disc, or an optical disc.

Finally, it should be noted that the foregoing embodiments are merely intended for describing the technical solutions of the present invention other than limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. An AirSharing method, comprising:
determining whether an interface to be shared currently is a media interface;
if the interface to be shared currently is a media interface, implementing AirSharing with a peer device in a Digital Living Network Alliance manner; and
if the interface to be shared currently is not a media interface, implementing AirSharing with the peer device in a mirroring manner.

2. The method according to claim 1, wherein the determining whether an interface to be shared currently is a media interface comprises:
obtaining a current application state of a media application; and
determining, according to the current application state, whether the interface to be shared currently is a media interface.

3. The method according to claim 2, wherein the obtaining a current application state of a media application comprises:
after establishing a communication connection with the peer device, obtaining the current application state of the media application;
or,
after opening a media file to be shared, obtaining the current application state of the media application.

4. The method according to claim 3, wherein after the opening a media file to be shared, the method further comprises:
determining whether there exists a communication connection with the peer device; and
if there exists a communication connection with the peer device, executing the step of obtaining the current application state of the media application.

5. The method according to any one of claims 2 to 4, wherein the obtaining a current application state of a media application comprises:
obtaining an interface reference value in a processing progress; and
the determining, according to the current application state, whether the interface to be shared currently is a media interface comprises:
determining, according to the interface reference value, whether the interface to be shared currently is a media interface.

6. The method according to any one of claims 1 to 5, wherein if the interface to be shared currently is a media interface, before the implementing AirSharing with a peer device in a Digital Living Network Alliance manner, the method further comprises:
determining whether the peer device supports the Digital Living Network Alliance manner; and
if the peer device supports the Digital Living Network Alliance manner, executing the step of implementing AirSharing with the peer device in the Digital Living Network Alliance manner.

7. An AirSharing apparatus, comprising:
a media interface determining module, configured to determine whether an interface to be shared currently is a media interface;
a first AirSharing module, configured to implement AirSharing with a peer device in a Digital Living Network Alliance manner if the interface to be shared currently is a media interface; and
a second AirSharing module, configured to implement AirSharing with the peer device in a mirroring manner if the interface to be shared currently is not a media interface.

8. The apparatus according to claim 7, wherein the media interface determining module comprises:
an application state obtaining unit, configured to obtain a current application state of a media application; and
a media interface determining unit, configured to determine, according to the current application state, whether the interface to be shared currently is a media interface.

9. The apparatus according to claim 8, wherein the application state obtaining unit is specifically configured to:
after a communication connection is established with the peer device, obtain the current application state of the media application;
or,
after a media file to be shared is opened, obtain the current application state of the media application.

10. The apparatus according to claim 9, further comprising:
a communication connection determining module, configured to determine, after the media file to be shared is opened, whether there exists a communication connection with the peer device; and
if there exists a communication connection with the peer device, the application state obtaining unit executes the step of obtaining the current application state of the media application.

11. The apparatus according to any one of claims 8 to 10, wherein the application state obtaining unit is specifically configured to obtain an interface reference value in a processing progress; and
the media interface determining unit is specifically configured to determine, according to the interface reference value, whether the interface to be shared currently is a media interface.

12. The apparatus according to any one of claims 7 to 11, further comprising:
a Digital Living Network Alliance capability determining module, configured to determine whether the peer device supports the Digital Living Network Alliance manner; and
if the peer device supports the Digital Living Network Alliance manner, the first AirSharing module executes the step of implementing AirSharing with the peer device in the Digital Living Network Alliance manner.

13. A terminal device, comprising a processor and a communication module, wherein the processor is configured to determine whether an interface to be shared currently is a media interface; and
the communication module is configured to: if the interface to be shared currently is a media interface, implement AirSharing with a peer device in a Digital Living Network Alliance manner; and if the interface to be shared currently is not a media interface, implement AirSharing with the peer device in a mirroring manner.

14. The method according to claim 13, wherein the processor is specifically configured to:
obtain a current application state of a media application; and
determine, according to the current application state, whether the interface to be shared currently is a media interface.
